# EUROPEAN PATENT SPECIFICATION

(11) **EP 0 436 248 B1**
(45) Date of publication and mention of the grant of the patent: **13.10.1993**
(21) Application number: 90203307.5
(22) Date of filing: 13.12.1990
(51) Int. Cl.: A01D 75/20

(54) **Agricultural implement**
Landwirtschaftliches Gerät
Instrument agricole

(30) Priority: 05.01.1990 NL 9000026
(43) Date of publication of application: 10.07.1991
(73) Proprietor: Greenland Geldrop B.V., NL-5667 KP Geldrop (NL)
(72) Inventor: Quataert, Petrus Maria, NL-5671 BC Nuenen (NL)
(74) Representative: Vollebregt, Cornelis Jacobus, Ir.

(56) References cited:
- DE-U- 8 327 276
- DE-U- 8 521 683
- DE-U- 8 804 699
- FR-A- 2 222 603
- GB-A- 2 187 219

## Description

The invention relates to an agricultural implement provided with a frame and with mowing means rotatably journalled in said frame, said mowing means being provided with cutting means for cutting crops on the ground, whereby a guard plate extending above the mowing means is provided on the frame of said device, at the bent-over circumferential edge of which there is provided, a protective canvas by means of an attachment ledge disposed at the upper side of said protective canvas, said protective canvas descending from said guard plate.

Such an implement is known from German Gebrauchsmuster G 83 27276.

With this known construction the attachment ledge is retained between an edge of the plate, which is bent over at right angles with respect to the guard plate, and a retaining section attached to the bottom side of the guard plate. Said retaining section must be produced separately and be fixed to the bottom side of the guard plate, e.g. by means of spot-welding or the like process. This involves a number of operations, as a result of which the building of this construction is a time-consuming and expensive process.

The object of the invention is to obtain an agricultural implement of the above kind, wherein the drawbacks of the known implement can be avoided.

According to the invention this can be accomplished in that the circumferential edge of the guard plate is bent over in the shape of a gutter which is open at its upper end and which has an at least substantially U-shaped section, in which the attachment ledge is accommodated.

Such a U-shaped gutter may be formed particularly simply and quickly by bending over the edge of the guard plate, at substantially the same effort and cost as for forming an edge which extends only perpendicularly with respect to the guard plate, whilst the attachment ledge of the protective canvas can be provided in a simpler and faster manner in the U-shaped gutter thus formed, without making use of further means of attachment.

According to the invention such a protective canvas can be provided in a particularly fast and simple manner when the circumferential edge of the guard plate is bent over in the shape of a gutter being open at its upper end and having an at least substantially U-shaped section whereby, before bending the gutter into its final shape, the attachment ledge is placed in the U-shaped gutter, after which the gutter is given its final shape.

When using such a method the attachment ledge can be placed in the U-shaped gutter without any effort, after which it is fixed by further deforming the gutter.

The invention will be explained in more detail hereafter, with reference to a few possible embodiments of the construction according to the invention diagrammatically illustrated in the accompanying Figures.

Figure 1 is a diagrammatic sectional view of a first embodiment of a part of a guard plate with a protective canvas attached thereto.

Figure 2 is a sectional view, corresponding with Figure 1, showing a phase of the process of connecting the protective canvas with the guard plate.

Figures 3 - 6 are sectional views, corresponding with Figure 1, of further possible embodiments of the construction according to the invention.

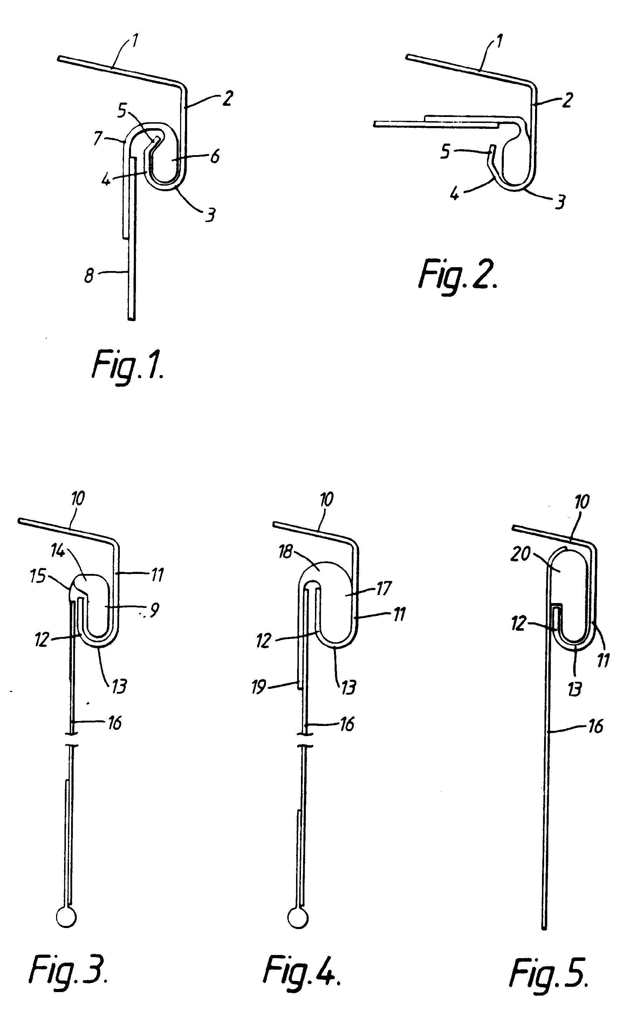

Figure 1 shows part of a guard plate 1 of an agricultural implement, e.g. a mowing machine such as illustrated in the above-mentioned German Gebrauchsmuster G 8327276.

The edge of the guard plate is bent over, so that a downwardly extending leg 2 is formed, which joins up with the guard plate 1, said leg via a curved part 3 blending into a leg 4 extending parallel to the leg 2 and joining up with the part 3. The upper edge 5 of the leg 4 is bent in the direction of the leg 2. Thus the bent-over parts 2 - 5 define a substantially U-shaped gutter, which is open at its upper side. As a result of the aforesaid bend of the edge 5 the entrance to the gutter is smaller, when seen in sectional view, than the remaining part of the gutter located thereunder.

The gutter accommodates an attachment ledge 6 whose shape is adapted to the shape of the gutter, said attachment ledge e.g. being made of a suitable plastic material and whose upper side is joined by a connecting strip 7 being integral therewith, which is considerably thinner, when seen in sectional view, than the attachment ledge 6, and which will be flexible. The connecting strip 7 is folded around the leg 4, and extends downwardly. To said connecting strip there is attached the upper edge of a protective canvas 8, e.g. by means of glueing, welding or sealing.

When the guard plate is being produced first the edge of the guard plate will be bent over into the position illustrated in Figure 2, in which position the leg 4 does not extend parallel to the leg 2 yet, but still slopes upwards from the leg 2 in a direction remote from the leg 2. In this position of the bent-over edge of the guard plate 1 the attachment ledge 6 may be placed in the gutter in a simple manner, as is indicated in Figure 2. Usually it will be necessary to push the leg 4 further into the direction of the leg 2 than is illustrated in Figure 1, and then the resilience of the leg 4 will make it spring back into the position illustrated in Figure 1. In its final position illustrated in Figure 1 the bent-over edge 5 prevents the attachment ledge 6 from moving upwards out of the U-shaped gutter. The construction may thereby be arranged such, however, that the attachment ledge 6 is movable in the direction of the gutter. As a result of this it is possible to remove a possibly damaged protective canvas from the guard plate by sliding the attachment ledge 6 out of the gutter. In a similar manner the attachment ledge of a new protective canvas may be slid into the gutter again, without having to bend parts of the gutter. Because of this easy interchangeability of the protective canvas it will be more readily decided to exchange a damaged canvas, which contributes to the safety.

Figure 3 shows an embodiment whereby an attachment ledge 9 is accommodated in a gutter having a U-shaped section, said gutter being formed along the circumferential edge of a guard plate 10. In this embodiment the gutter is formed by a pair of legs 11 and 12 extending parallel to each other, said legs being connected by a bend 13 defining the bottom side of the gutter. At its end projecting above the gutter the attachment ledge is furthermore provided with a nose 14 projecting under the guard plate, towards the inside, an attachment strip 15 joining said nose. The protective canvas 16 is attached to said attachment strip. In this embodiment the attachment strip 9 can be slid into the U-shaped gutter from above, and subsequently be fixed in the gutter, by locally pressing the two legs 11 and 12 together, thus gripping the attachment ledge 9.

In Figures 4 - 6 those parts that correspond with parts illustrated in Figure 3 have been given the same reference numbers as in Figure 3.

In the embodiment according to Figure 4 the attachment ledge 17 is provided with a flexible connecting strip 19 being integral therewith and joining said attachment ledge 17 via a curved connecting part 18. To said connecting strip there is again attached the protective canvas 16.

In the embodiment according to Figure 5 the upper part of the attachment ledge 20 is made thicker than the part of said attachment ledge located in the gutter, so that said thicker part of the attachment ledge projects beyond the leg 12 of the gutter. The upper edge of the protective canvas 16 is thereby directly attached to said thicker part of the attachment ledge.

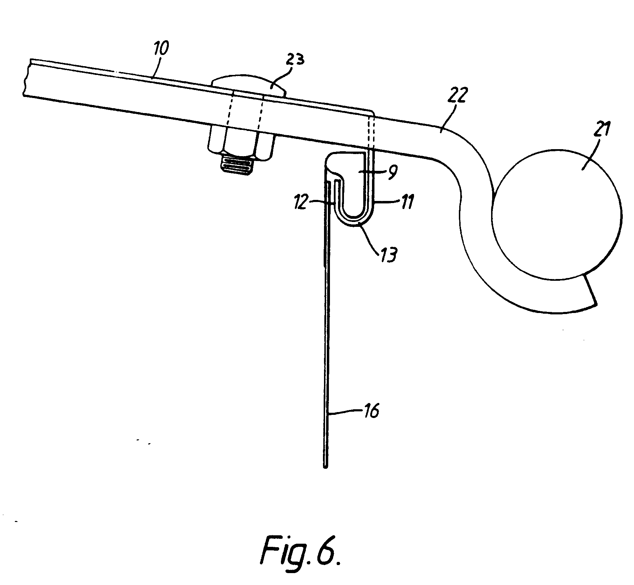

The embodiment according to Figure 6 substantially corresponds with the one according to Figure 3. As is illustrated in Figure 6, however, a guard plate is usually surrounded by a buffer beam 21. Said buffer beam, which also functions to protect the protective canvas, is supported by the bent-over edges of a plurality of spaced strips 22 extending perpendicularly to the longitudinal direction of the buffer beam. As illustrated in Figure 6 said strips are passed through holes provided in the upper part of the leg 11, in such a manner that said strips are fixed, abutting against the bottom side of the guard plate 10, by means of bolts 23. It will be apparent that the strips 22 also function as retaining means for the attachment ledge 9 hereby, since the strips 22 prevent the attachment ledge from moving upwards.

## Claims

1. Agricultural implement provided with a frame and with mowing means rotatably journalled in said frame, said mowing means being provided with cutting means for cutting crops on the ground, whereby a guard plate (1) extending above the mowing means is provided on the frame of said device, at the bent-over circumferential edge of which there is provided a protective canvas (8), by means of an attachment ledge (6) disposed at the upper side of said protective canvas, said protective canvas descending from said guard plate, said attachment ledge being thicker, when seen in sectional view, than the part of the protective canvas joining said attachment ledge, characterized in that the circumferential edge of the guard plate is bent over in the shape of a gutter which is open at its upper end and which has an at least substantially U-shaped section, in which the attachment ledge is accommodated.

2. Agricultural implement according to claim 1, characterized in that the upper edge (5) of a leg (4) bounding said U-shaped gutter is bent over in the direction of an opposite leg (2) bounding the gutter, and that the part of the attachment ledge located near the bent-over upper edge is thinner, when seen in sectional view, than the part of the attachment ledge located thereunder in the U-shaped gutter.

3. Agricultural implement according to claim 1, characterized in that said gutter is defined by two parts extending at least substantially parallel to each other, said parts being pressed together locally so as to grip the attachment ledge.

4. Agricultural implement according to any one of the preceding claims, characterized in that a connecting strip (7), which is integral with the attachment ledge, joins the upper edge of said attachment ledge, the upper edge of said protective canvas being attached to said connecting strip.

5. Agricultural implement according to any one of the preceding claims, characterized in that a buffer beam (21), extending along the outer circumference of the guard plate (10), is fixed to said guard plate by means of strips (22) which are passed through holes provided in the bent-over circumferential edge of the guard plate, and which are fixed to the bottom side of said guard plate, in such a manner that the parts of the strip located between the bottom side of the guard plate and the open upper side of the U-shaped gutter secure the attachment ledge in the U-shaped gutter.

6. Method of providing a protective canvas with an agricultural implement provided with a frame and with mowing means rotatably journalled in said frame, said mowing means being provided with cutting means for cutting crops on the ground, whereby a guard plate (1) extending above the mowing means is provided on the frame of said device, at the bent-over circumferential edge of which there is provided a protective canvas (8), by means of an attachment ledge (6) disposed at the upper side of said protective canvas, said protective canvas descending from said guard plate, said attachment ledge being thicker, when seen in sectional view, than the part of the protective canvas joining said attachment ledge, characterized in that the circumferential edge of the guard plate is bent over in the shape of a gutter which is open at its upper end and which has an at least substantially U-shaped section, whereby, before bending the gutter into its final shape, the attachment ledge is placed in the U-shaped gutter, after which the gutter is pressed into its final shape.

## Patentansprüche

1. Landwirtschaftliches Gerät, das mit einem Rahmen und mit in dem Rahmen drehbar gelagerten Mäheinrichtungen versehen ist, wobei die Mäheinrichtungen mit Schneideinrichtungen zum Schneiden von Kulturen auf dem Boden versehen ist, wobei am Rahmen der Vorrichtung ein sich über die Mäheinrichtungen erstreckendes Schutzblech (1) vorhanden ist, an dessen umgebogenem Umfangsrand ein Schutztuch (8) mittels einer Befestigungsleiste (6) angebracht ist, die an der Oberseite des Schutztuchs angeordnet ist, wobei das Schutztuch von dem Schutzblech herabhängt, wobei die Befestigungsleiste, im Schnitt gesehen, dicker ist als der Teil des Schutztuchs, der mit der Befestigungsleiste verbunden ist, **dadurch gekennzeichnet,** daß der Umfangsrand des Schutzblechs in Form einer Rinne umgebogen ist, die an ihrem oberen Ende offen ist und einen wenigstens im wesentlichen U-förmigen Abschnitt hat, in dem die Befestigungsleiste aufgenommen wird.

2. Landwirtschaftliches Gerät nach Anspruch 1, **dadurch gekennzeichnet,** daß die obere Kante (5) eines Schenkels (4), der die U-förmige Rinne begrenzt, in Richtung eines gegenüberliegenden Schenkels (2), der die Rinne begrenzt, umgebogen ist, und dadurch, daß der in der Nähe der umgebogenen oberen Kante befindliche Teil der Befestigungsleiste, im Schnitt gesehen, dünner ist als der Teil der Befestigungleiste, der sich darunter in der U-förmigen Rinne befindet.

3. Landwirtschaftliches Gerät nach Anspruch 1, **dadurch gekennzeichnet,** daß die Rinne durch zwei Teile gebildet wird, die wenigstens im wesentlichen parallel zueinander verlaufen, wobei die Teile stellenweise zusammengepreßt sind, um die Befestigungsleiste einzuklemmen.

4. Landwirtschaftliches Gerät nach einem der vorangehenden Ansprüche, **dadurch gekennzeichnet,** daß ein fest mit der Befestigungsleiste verbundener Verbindungsstreifen (7) mit der Oberkante des Befestigungsstreifens verbunden ist, wobei die Oberkante des Schutztuchs an dem Verbindungsstreifen befestigt ist.

5. Landwirtschaftliches Gerät nach einem der vorangehenden Ansprüche, **dadurch gekennzeichnet,** daß ein Stossbalken (21), der am äußeren Rand des Schutzblechs (10) verläuft, mittels Streifen (22) am Schutzblech befestigt ist, die durch im umgebogenen Umfangsrand des Schutzblechs vorhandene Löcher geführt werden, und die an der Unterseite des Schutzblechs so befestigt sind, daß die Teile des Streifens, die sich zwischen der Unterseite des Schutzblechs und der offenen Oberseite der U-förmigen Rinne befinden, die Befestigungsleiste in der U-förmigen Rinne halten.

6. Verfahren zur Anbringung eines Schutztuchs an einem landwirtschaftlichen Gerät, das mit einem Rahmen und mit in dem Rahmen drehbar gelagerten Mäheinrichtungen versehen ist, wobei die Mäheinrichtungen mit Schneideinrichtungen zum Schneiden von Kulturen auf dem Boden versehen ist, wobei am Rahmen der Vorrichtung ein sich über die Mäheinrichtungen erstreckendes Schutzblech (1) vorhanden ist, an dessen umgebogenem Umfangsrand ein Schutztuch (8) mittels einer Befestigungsleiste (6) angebracht ist, die an der Oberseite des Schutztuchs angeordnet ist, wobei das Schutztuch von dem Schutzblech herabhängt, wobei die Befestigungsleiste, im Schnitt gesehen, dicker ist als der Teil des Schutztuchs, der mit der Befestigungsleiste verbunden ist, **dadurch gekenn-** **zeichnet,** daß der Umfangsrand des Schutzblechs in Form einer Rinne umgebogen ist, die an ihrem oberen Ende offen ist und einen wenigstens im wesentlichen U-förmigen Abschnitt hat, wobei, bevor die Rinne in ihre endgültige Form gebogen wird, die Befestigungsleiste in der U-förmigen Rinne angebracht wird und anschließend die Rinne in ihre endgültige Form gepreßt wird.

## Revendications

1. Outil agricole muni d'un cadre et des moyens de fauchage monté tournant sur ledit cadre, ledit moyens de fauchage étant muni des moyens de coupe pour la découpe de cultures sur le sol, une plaque de protection (1), s'étendant au-dessus des moyens de fauchage, étant ainsi prévue sur le cadre dudit dispositif sur le bord circonférenciel recourbé de laquelle est prévue une toile épaisse de protection (8) au moyen d'un rebord de fixation (6) placé sur le côté supérieur de ladite toile de protection, ladite toile de protection descendant de ladite plaque de protection, ledit rebord de fixation étant plus épais, en vue de section droite, que la partie de la toile épaisse de protection se raccordant audit rebord de fixation,
outil caractérisé en ce que le bord circonférenciel de la plaque de protection est recourbé sous la forme d'une gouttière qui est ouverte à son extrémité supérieure et présentant une section au moins globalement en forme de U dans laquelle est logé le rebord de fixation.

2. Outil agricole selon la revendication 1, caractérisé en ce que le bord supérieur (5) d'une jambe (4) liée à ladite gouttière en forme de U est recourbé dans la direction d'une jambe opposée (2) liée à la gouttière et en ce que la partie du rebord de fixation située près du bord supérieur recourbé est plus mince, en vue de section droite, que la partie du rebord de fixation située ci-dessous dans la gouttière en forme de U.

3. Outil agricole selon la revendication 1, caractérisé en ce que ladite gouttière est définie par deux parties s'étendant au moins globalement parallèlement l'une à l'autre, lesdites parties étant solidarisées localement de façon à accrocher le rebord de fixation.

4. Outil agricole selon l'une quelconque des revendications précédentes, caractérisé en ce qu'une bande de raccordement (7), intégrale au rebord de fixation, est reliée au bord supérieur dudit rebord de fixation, le bord supérieur de ladite toile épaisse de protection étant fixé à ladite bande de raccordement.

5. Outil agricole selon l'une quelconque des revendications précédentes, caractérisé en ce qu'une barre de butoir (21), s'étendant le long de la circonférence externe de la plaque de protection (10), est fixée à ladite plaque de protection au moyen de bandes (22) traversant des ouvertures prévues dans le bord circonférenciel recourbé de la plaque de protection et fixées au bord inférieur de ladite plaque de protection de telle façon que les parties de bande, situées entre le bord inférieur de la plaque de protection et le côté supérieur ouvert de la gouttière en forme de U, fixent le rebord de fixation dans la gouttière en forme de U.

6. Procédé de montage d'une toile épaisse de protection sur un outil agricole muni d'un cadre et des moyens de fauchage monté tournant dans ledit cadre, ledit moyens de fauchage étant muni des moyens coupe pour la découpe de cultures sur le sol, une plaque de protection (1), s'étendant au-dessus moyen de fauchage, étant ainsi prévue sur le cadre dudit dispositif sur le bord circonférenciel recourbé de laquelle est prévue une toile épaisse de protection (8) au moyen d'un rebord de fixation (6) placé sur le côté supérieur de ladite toile de protection, ladite toile de protection descendant de ladite plaque de protection, ledit rebord de fixation étant plus épais, en vue de section droite, que la partie de la toile épaisse de protection se raccordant audit rebord de fixation,
procédé caractérisé en ce que le bord circonférenciel de la plaque de protection est recourbé sous la forme d'une gouttière qui est ouverte à son extrémité supérieure et présentant une section au moins globalement en forme de U, le rebord de fixation étant ainsi placé dans la gouttière en forme de U avant cambrage de la gouttière dans sa forme finale, après quoi la gouttière est pressée dans sa forme finale.
